# EUROPEAN PATENT APPLICATION

(11) **EP 4 686 320 A1**
(43) Date of publication of application: **28.01.2026**
(21) Application number: 24199240.3
(22) Date of filing: 09.09.2024
(51) Int. Cl.: H04W 84/18, H04L 1/18, H04W 48/16, H04W 52/02

(54) **PERSONAL AREA NETWORK (PAN) DEVICE, SYSTEM AND METHOD FOR PAN SUPPORT**

(30) Priority: 22.07.2024 RO 202400426
(71) Applicant: NXP USA, Inc., Austin, TX 78735 (US)
(72) Inventor: Caciuloiu, Cristian, 5656AG Eindhoven (NL)
(74) Representative: Colaiuda, Antonella

(57) **Abstract**

A method for delegating personal access network, PAN, responsibilities to a companion PAN device comprises: receiving, at the companion PAN device, at least one configuration parameter from a multiple-protocol PAN device configured to support Zigbee^{™} and another communication protocol; and entering a sleep mode by the multiple-protocol PAN device. The configuration parameter comprises instructions to temporarily enable the companion PAN device, during periods of inactivity in supporting the another communication protocol, to perform the following: receiving at least one medium access control, MAC, access request from at least one child device associated with the multiple-protocol PAN device; and performing a subset of roles of a full Zigbee^{™} communication stack therefor, that includes: responding with an acknowledgement; and buffering and storing frames from the child device. The companion PAN device subsequently receives a wake-up message from the multiple-protocol PAN device; and forwards retrieved stored frames to the multiple-protocol PAN device.

## Description

### Technical Field

The technical field relates to a device, system and method for personal area network (PAN) support. The technical field is applicable to, but not limited to, a device, system and method for using a companion Zigbee^{™} node to receive and implement delegated medium access control (MAC) acknowledgement (ACK) procedures for incoming data packets directed to a PAN device.

### Background

In cost-efficient, low-rate (LR), wireless personal area network (WPAN) nodes (as defined in the Institute of Electrical and Electronic Engineers (IEEE) standard: 802.15.4), a concept of Dual-PAN support is identified, sometimes referred to as 'time sharing' between supported protocols. The standard allows a Dual-PAN node to know in advance a wake schedule of its children and enables the Dual-PAN to be able to build and schedule overall PAN activity for its Zigbee^{™} PAN presence to be able to switch to the other PAN only when the likelihood of one of its children being awake is lowest. In reality, the inventor has identified that Zigbee^{™} end devices (ZED) that operate in accordance with the IEEE.802.15.4 standard may not have a periodic activity and therefore may need to use 'unsynchronized transmissions' in order to communicate with its parent. Hence, this scheduling method may often fail.

Furthermore, the implementation of dual PAN support is complicated by a need to combine multi-protocol operation on the same device, typically operating with a single radio hardware subsystem. The dual LR-WPAN protocols that are to be supported benefit from channel isolation for their own network operation (as this would limit the broadcast propagation that can occur during certain network functions). However, that channel isolation is an important software design capability for a border LR-WPAN node that implements dual-WPAN support, i.e., a LR-WPAN node that is located on the extremity of a WPAN network. It is known that time-sharing of the same 802.15.4 standard across radio medium access control (MAC) hardware between two protocols needs to support the most demanding timing constraint of each of the dual WPAN networks.

In addition, the inventor has recognised and appreciated that sleepy ZEDs are also exposed to clock drift during their sleep. This means that their 'timing' runs at a different pace compared to its parent, due to using a low power clock source that is more imprecise during sleep and typically they do not employ a costly wall-clock that would enable re-synchronization from time-to-time. Hence, after a while, their parent may observe a drift in the arrival time of the awake intervals of its children, seen either in form of drifting arrival of a Data Request, or increased no-acknowledgement (NACK) rate from its children to synchronized transmission attempts without Data Requests.

Thread^{™} is one example of an internet protocol (IP)v6-based, low-power mesh networking technology suitable for the evolving technology of Internet of things (loT) products. Thread^{™} is a low-power and low-latency wireless mesh networking protocol built using open and proven standards and uses IPv6 over Low-Power WPAN (6LoWPAN), which is based on the use of a connecting router, called an edge router. In the Thread^{™} protocol, edge routers are referred to as 'Border Routers' or 'Border Nodes'. Thread^{™} is based on existing technologies in all its layers: from routing, packeting, and security to its wireless radio technology. Similar to Wi-Fi, with its broad range of devices, Thread^{™} is an open standard that is not tied to a specific manufacturer, which minimizes the risk of incompatibilities. Notably, Thread's internet protocol (IP) foundation is application-agnostic, offering product manufacturers the flexibility to choose one (or multiple) application layers to connect devices across multiple networks. Thus, it is understood that Thread^{™} solves the complexities of the loT, addresses challenges such as interoperability, range, security, energy, and reliability.

The multi-protocol convergence in the loT (and Industrial loT) space has recently become a hot topic, particularly in the System on Chip (SoC) marketplace. The hardware solutions currently on offer have been optimized to offer multiple protocols that use distinct layer-one (L1 physical layer) hardware (HW) blocks (e.g. WiFi^{™} + 802.15.4, or BLE + 802.15.4). However, a recent trend accelerated by the Matter intense promotion, asks for concurrent support of at least two protocols, e.g., dual protocol support within the 802.15.4. i.e., concurrent support in a dual-PAN, of Zigbee^{™} and at least one other communication protocol.

It is known that whilst a border node is servicing at least one other communication protocol, e.g., the Thread^{™} network, and is absent for an extended period of time from a Zigbee^{™} PAN, the children of the border node may want to interact with it. This may result in exhausting a number of protocol retries, following which the child/children enter(s) into an 'orphan' state and rejoins the PAN, whenever possible. To avoid this network re-configuration, the inventor has recognised and appreciated that a border dual-pan node needs to serve at least the MAC ACK part of the protocol, which has the tightest timing constraints.

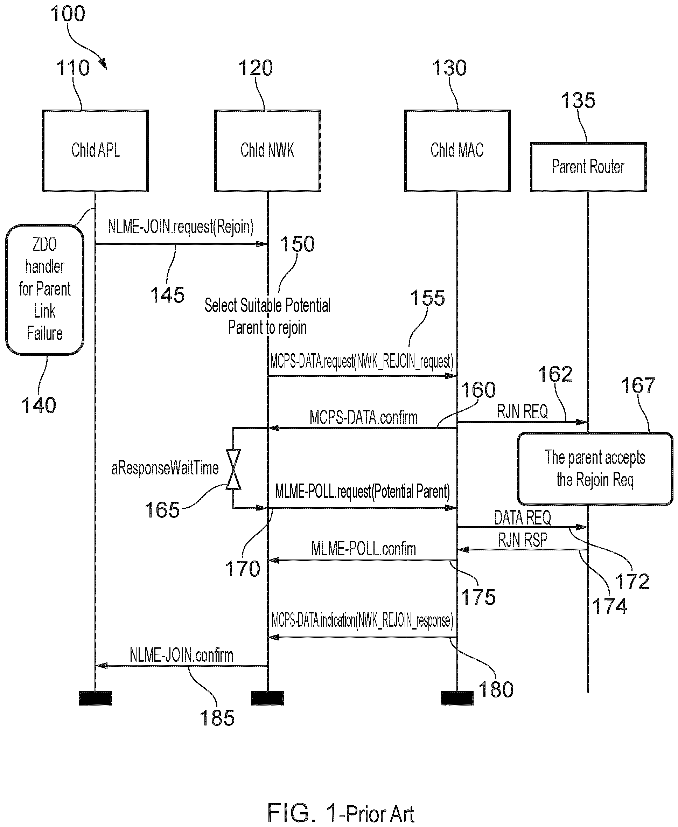

The Zigbee^{™} specification provides a process to rejoin the network in case the Zigbee^{™} End Device (ZED), which can be viewed as a `child' device, fails to reach its 'parent' (e.g., due to too many MAC NACK messages). The ZED, if exceeded the number of allowed parent link failures, shall rejoin the network. The ZED may perform a new scan over multiple channels. FIG. 1 illustrates a simplified known message sequence chart 100 representation of a known ZED/'child' re-join procedure, where a border node, i.e., sometimes referred to as a Zigbee^{™} parent node, is servicing the at least one other communication protocol, e.g., Thread^{™} network, and is absent from a Zigbee^{™} PAN for an extended period. The message sequence chart 100 comprises communications between functions within a child node, i.e., a child application layer function 110, a child Network (NWK) layer security function 120 and a child medium access control (MAC) layer function 130 and communication with a parent router 135. The child NWK layer security function 120 is used to secure all traffic sent on a Zigbee^{™} network, with the exception of basic MAC layer communication, such as association, data requests (polling), and MAC ACKs.

At 140, the child application layer function 110 identifies a communication of a Zigbee^{™} Device Object (ZDO) handler for a failure of a child-parent link. A ZDO (occupying Endpoint 0 of each node) is a stack-level entity defined by the Zigbee^{™} Networking Specification for use in network management and information gathering. At 145, the child application layer function 110 sends a network layer management entity (NLME)-Join request (which may be a re-join request) to the child NWK layer security function 120. At 150, the child NWK layer security function 120 selects a suitable potential parent node to facilitate a re-join. The child NWK layer security function 120 then sends at 155 a MAC common part sublayer (MCPS)-Data request message (in a form of a NWK-Rejoin request) to the child MAC layer function 130. The child MAC layer function 130 sends a rejoin request at 162 to the parent router 135, which the parent router 135 accepts at 167. In response to the successful transmission of the Rejoin Request to the parent router 135, the child MAC layer function 130 sends at 160 a MCPS-Data confirmation message to the child NWK layer security function 120 and at 165 the child NWK layer security function 120 waits a period of time (i.e., a response wait time). At 170, the child NWK layer security function 120 then sends a MAC sublayer management entity (MLME)-Poll request for a potential parent message to the child MAC layer function 130. The child MAC layer function 130 sends a data request at 172 to the parent router 135, and the parent router 135 responds to the child with a rejoin response 174. In response, the child MAC layer function 130 sends at 175 a Poll confirmation message to the child NWK layer security function 120. Thereafter, the child MAC layer function 130 sends at 180 a MCPS-Data indication message (in a form of a NWK-Rejoin response) to the child NWK layer security function 120. At 185, the child NWK layer security function 120 sends a NLME-Join confirmation message to the child application layer function 110.

The inventor has recognised and appreciated a number of problems with the above scenario. A first problem is that a dual protocol or multiple-protocol PAN parent may not be able to respond to the rejoin request (e.g., a beacon request) while servicing the other (second) PAN/channel. Furthermore, the excessive radio activity following the above procedure causes increased power consumption for the ZED. In addition, it is complex and costly for manufacturers to implement a device supporting a dual protocol or multiple-protocol PAN in a cost-effective processor with a single and shared radio subsystem. The configuration of various parameters, such as re-transmissions, a polling interval, etc. Setting a reasonable number of re-transmissions and a reasonable polling interval can only achieve limited success and are known to be tailored to (and limited to) modest network deployments.

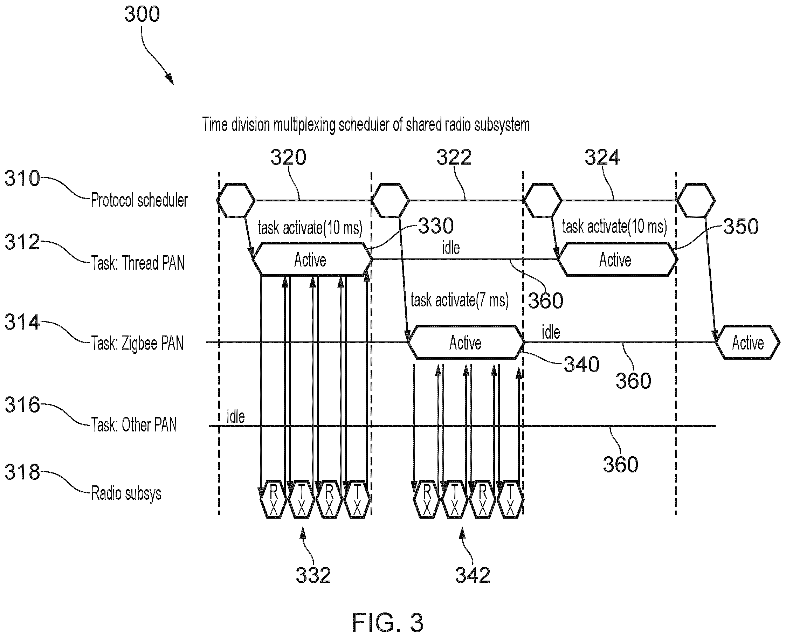

Time sharing the radio blocks of the 802.15.4 subsystem between protocols is the main known hardware solution on the market today, as true duplication of radio hardware to support each protocol is rare (due to the expense and consumption of silicon area. With time sharing, a multi-protocol node runs a few tasks on a CPU in a system that includes a single radio subsystem. The radio access time per supported protocol is granted by a protocol scheduler, as exemplified by 310 in FIG. 3. For example, the protocol scheduler may grant access to the radio subsystem for two active protocols, e.g., Thread^{™} and Zigbee^{™}. The scheduled duration of the protocol activity may vary, depending on the scheduling policies (e.g. Thread^{™} is allocated 10 msec., while Zigbee^{™} is allocated 7 msec.). During this activity period, the allocated protocol has exclusive use of the radio subsystem and may use it to switch to its own channel (distinct of that used by the other protocol) and to transmit or to receive communications specific to that protocol.

Often, a radio-chip-only solution is offered in a form of an external module connected to another chip. One problem with sharing the radio blocks is that while serving on one protocol, the nodes on the other protocol may need the services of the multi-protocol node. Sharing also the radio channel between protocol P1 and P2 might help if the said protocols use the same L1/2 (for example Thread^{™} and Zigbee^{™} both use 802.15.4's, the same offset quadrature phase shift keying (O-QPSK) modulation schemes and beaconless modes and share a common set of frame formats). The advantage of sharing the physical (L1) channel is that the software portion of the data link (L2) layer can be unified and receive frames from either Zigbee^{™} or Thread^{™}, and process them without leaving any of the P1 and P2 unattended for a significant amount of time. However, the inventor has recognized and appreciated that the occasional broadcast storms from one network may well disturb the other network, possibly leading to chain reactions that effectively degrade both networks. In such a scenario, the channel isolation of P1 and P2 is the preferred deployment option, hence exposing a lack of true 'simultaneous execution of the P1 and P2 physical channels at L1/2 layers.

For example, the inventor has recognized and appreciated that if the P1 requires more time in order to service a particular traffic intensive commissioning phase, the node acting as multiple-protocol PAN, concurrently supporting Zigbee^{™} and at least one other communication protocol, will have to reduce the time spent listening to and supporting servicing requests on the P2 protocol. In a case of the P2 physical channel being configured to support Zigbee^{™}, the receiver (Rx) being turned 'Off' when Idle (i.e., placed in a sleep mode), results in ZEDs not being aware that their parent has left the channel. Hence, the ZED/child node will wake up and try to communicate with the said absent parent, and the lack of MAC ACK will trigger an 802.15.4 Section 6.5.5 'Orphaned device realignment'. The consequences of this scenario, which will likely occur frequently, are energy-expensive for the ZED: either orphaned device realignment through scanning the available channels or resetting the state and attempting an association procedure.

EP 2 750 448 A1 describes a Zigbee^{™} Green Power standard based on proxy redundancy, where the mains-powered routers identify a resource-constrained device wanting/sending a message to the network and collectively, using specific means, engage in forwarding the message on behalf of that ZED. The problem of acknowledged transmission is handled by maintaining a strict layer boundary in the proxies, which are specifically configured to terminate the protocol between the destination and the ZED and repackage the ZED's message into full format of the Zigbee^{™} Application Support Sublayer (APS); hence they are not equipped to take on higher layers responsibilities on behalf of the ZED. Notably, the NWK layer is only managing the routing and the adaptation to the special addressing mode multicast. Thus, the proxies are responsible for the full communication stack, and hence are handling all the packet forwarding/construction and the associated security processing and the challenge it tries to resolve is their synchronization in their duplicated activities

Accordingly, there is a need for an improved device, system and method for personal area network (PAN) support.

### Summary

Examples herein described provide a device, system and method for personal area network (PAN) communication support, as described in the accompanying claims. Specific examples are set forth in the dependent claims. These and other aspects will be apparent from and elucidated with reference to the embodiments described hereinafter.

According to a first aspect, there is provided a method for delegating PAN responsibilities to a companion PAN device configured to support Zigbee communications from a multiple-protocol PAN device. The method comprises, receiving, at the companion PAN device, at least one configuration parameter from the multiple-protocol PAN device that is configured to support Zigbee^{™} communications and at least one other communication protocol and entering a sleep mode by the multiple-protocol PAN device. The at least one configuration parameter comprises instructions to temporarily enable the companion PAN device, during periods of inactivity in supporting the at least one other communication protocol, to perform the following: receiving at least one medium access control, MAC, access request from at least one child device associated with the multiple-protocol PAN device. The method comprises performing a subset of roles of a full Zigbee^{™} communication stack on behalf of the multiple-protocol PAN device, wherein the subset of roles comprises: responding to the MAC access request from the at least one child device with an acknowledgement, ACK; and buffering and storing frames transmitted from the at least one child device to the multiple-protocol PAN device at the companion PAN device. The method comprises the companion PAN device subsequently receiving a wake-up message from the multiple-protocol PAN device; retrieving the stored frames received from the at least one child device; and forwarding the retrieved stored frames to the multiple-protocol PAN device following wake up.

In some examples, temporarily enabling the companion PAN device for performing a subset of roles of a full Zigbee^{™} communication stack may include temporarily enabling the companion PAN device to assume physical layer, L1, and data link layer, L2 responsibilities on behalf of the multiple-protocol PAN device for a duration of its absence from being in communication with the at least one child device, where the subset of roles of a full Zigbee^{™} communication stack comprises at least one from a group of: time-out configuration, data polling, data reception, frame counting, FC, Caching. Enabling this support in the companion PAN device may eliminate the disruptions in the PAN activity that the child ZEDs may experience during periods of time when their parent is actively servicing the other PAN/protocol, and not their requests, as the child ZED can only access the Zigbee network through their parents.

In some examples, entering a sleep mode by the multiple-protocol PAN device further comprises receiving, at the companion PAN device, an indication that the multiple-protocol PAN device is transitioning to a receive 'on' in an idle mode of operation, and receiving from the multiple-protocol PAN device a list of children found in a neighbor table stored in the multiple-protocol PAN device, where the list identifies the at least one child device that is to be responded by the companion PAN device on behalf of the multiple-protocol PAN device, for a duration of an absence of the multiple-protocol PAN device from being in communication with the at least one child device.

In some examples, in response to receiving a MAC access request from the at least one child device associated with the multiple-protocol PAN device, the method further may include reconfiguring by the companion PAN device a radio receiver and a MAC receiver of the companion PAN device to receive frames for its own MAC address and a MAC address of the multiple-protocol PAN device for a duration of an absence of the multiple-protocol PAN device from being in communication with the at least one child device. In some examples, the method may further include retrieving securely, by the companion PAN device from the multiple-protocol PAN device, PAN data packets previously received by the multiple-protocol PAN device for the at least one child device and an activity summary of the at least one child device.

In some examples, the at least one child device may include a plurality of Zigbee^{™} end devices, ZED, children and the multiple-protocol PAN device determines that a time-slice allocated to at the least one other communication protocol for communications provides time for the multiple-protocol PAN device to build an address list of the plurality of ZED children and send the address list to the companion PAN device using a dedicated command together with a timeout value after which the supporting activity of the multiple-protocol PAN device role by the companion PAN device is to end.

In some examples, the companion PAN device may be further configured to receive a PAN data packet from at least one child device, and in response thereto: validating that an address in the data message is located in the neighbour list configured by the multiple-protocol PAN device; sending to the at least one child device, either: (i) a MAC ACK without a Frame Pending bit set in response to a simple MAC Data Poll message sent by the at least one child device; (ii) a MAC ACK with a Frame Pending FP bit set to `1'; (iii) a network-encrypted end device Timeout Response success message, using an outgoing frame counter, FC, '+ 1' value of the multiple-protocol PAN device that had been stored from the previously received at least one configuration parameter; and a MAC short address of the multiple-protocol PAN device as a source address. The method may further include storing an updated time since a last activation of an activity service for the at least one child device. The child aging management is an important function that Zigbee^{™} parents are required to implement and their children actively reset their age monitored by the parent through MAC data polls or NWK secured timeout requests. The failure to execute this procedure is an important disruptive network event and, hence, the companion PAN device and its role described herein provides an important advantage in maintaining a smooth network operation for the children ZEDs, even when their parent is temporarily busy servicing another channel/PAN.

In some examples, the companion PAN device may be further configured to receive a PAN data packet from at least one child device identified in the supervised list, and wherein, in response to: receiving a Data Request to reset an aging counter in the multiple-protocol PAN device and receiving a query for pending messages, configuring the companion PAN device to send a MAC ACK with a Frame Pending FP bit set to '0', thereby causing the at least one child device to return to a sleep mode; or receiving a Data Frame sent to the multiple-protocol PAN device, configuring the companion PAN device to store the received Data Frame in an indirect queue for a destination address of the multiple-protocol PAN device.

In some examples, the method may further include marking, by the companion PAN device the address of the at least one child device as having had a successful radio activity.

In some examples, the method may further include, at the companion PAN device: receiving a request from the multiple-protocol PAN device for Data Frames received by the companion PAN device from children of the multiple-protocol PAN device; and retrieving from memory the stored Data Frames and sending the stored Data Frames to the multiple-protocol PAN device. In this way, the retransmissions that the child ZED might have had to perform, e.g., trying to reach the parent that was temporarily and for short period of time unavailable on the channel/PAN of the Zigbee^{™} network, are eliminated, and, hence, providing the advantage of the companion mechanism in saving the power of the children ZED is demonstrated.

In some examples, the request from the multiple-protocol PAN device may include one of: a dedicated, network-secured command, or a MAC Data Request having a MAC destination address of the companion PAN device, a MAC source address of the the multiple-protocol PAN device.

In some examples, the method may further include, by a scheduler of the companion PAN device: identifying when a Zigbee^{™} protocol is activated again by the multiple-protocol PAN device that indicates an end to a service activation period; and scheduling sending to the multiple-protocol PAN device at least one of: stored Data Frames, an activity summary received during an operation by the companion PAN device, a last network frame counter used.

In some examples, the at least one other communication protocol in the multiple-protocol PAN device may be a Thread^{™} communication protocol.

According to a second aspect, there is provided a personal access network, PAN, system comprising: a PAN device supporting Zigbee^{™} communications and at least one other communication protocol and adapted to temporarily transition to a replacement parent device implemented by another Zigbee device, having one or more child Zigbee^{™} end devices that provides a subset of roles of a full Zigbee^{™} communication stack on behalf of the multiple-protocol PAN device; a multiple-protocol PAN device configured to temporarily transfer a portion of its parent responsibilities to a PAN companion device, the PAN companion device comprising: a memory; and a processor configured to carry out the method according to the first aspect.

According to a third aspect, there is provided a multiple-protocol PAN device supporting and Zigbee^{™} communications and at least one other communication protocol and adapted to temporarily transition to a replacement parent device in a Zigbee device having one or more child Zigbee^{™} end devices and comprising a memory; and a processor configured to carry out the according to the first aspect.

### Brief description of the drawings

Further details, aspects and examples will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 illustrates a simplified known message sequence chart representation of a known child re-join procedure, where a border node is servicing the Thread^{™} network and is absent from a Zigbee^{™} PAN for an extended period.
FIG. 2 illustrates a simplified representation of a radio subsystem supporting Thread^{™} and Zigbee^{™} communications, according to some examples.
FIG. 3 illustrates an example of time division multiplexing scheduler of a shared radio subsystem where the shared radio subsystem supports a Zigbee^{™} PAN and at least one further PAN, such as a Thread^{™} PAN, according to some examples.
FIG. 4 illustrates further simplified representations of a radio subsystem supporting Thread^{™} and Zigbee^{™} communications using a Zigbee^{™} companion node, according to some examples.
FIG. 5 illustrates a simplified message sequence chart for identifying a suitable Zigbee^{™} companion node in a radio subsystem supporting Thread^{™} and Zigbee^{™} communications, according to some examples.
FIG. 6 illustrates a simplified message sequence chart for configuring a suitable Zigbee^{™} companion service in a radio subsystem supporting Thread^{™} and Zigbee^{™} communications, according to some examples.
FIG. 7 illustrates a simplified message sequence chart for supporting a Zigbee^{™} companion service in a radio subsystem supporting Thread^{™} and Zigbee^{™} communications, according to some examples.
FIG. 8 illustrates a simplified message sequence chart for supporting frame caching in a Zigbee^{™} companion service in a radio subsystem supporting Thread^{™} and Zigbee^{™} communications, according to some examples.
FIG. 9 illustrates a simplified flowchart or a method for delegating PAN responsibilities to a companion PAN device from a multiple-protocol PAN device, according to some examples.

### Detailed description

Examples are described for a PAN router, sometimes referred to as a multiple-protocol PAN device, that is configured to support Zigbee^{™} protocol communications and at least one other communication protocol, for example, Thread^{™}. Thread^{™} is just one example in today's convergence of multiple loT protocols that may be employed in concepts herein described. In the examples described herein, it is envisaged that a multiple-protocol PAN may support Zigbee^{™} communications and one or more further communication protocols, including proprietary 802.15.4 protocols. In order to avoid creating orphaning situations, where a Zigbee^{™} router node is also servicing another protocol, such as a Thread^{™} network and is identified as being absent a longer period from the Zigbee^{™} PAN, examples described herein propose that a PAN companion Zigbee^{™} device (functioning as a gateway or border router or such running a multi-PAN multi-protocol software stack, one protocol being for a Zigbee^{™} router, and say another protocol being for a Thread^{™} router), the multiple-protocol PAN device delegates a subset of its layer-1/Layer-2 (L1/2) responsibilities to the PAN 'companion' Zigbee^{™} device for a duration of its absence from the Zigbee PAN whilst servicing a physical layer (P1) protocol. In some examples, the subset of functionalities that are delegated may include: end device aging, data poll response, caching data transmitted by the ZED to its Zigbee^{™} parent.

Zigbee^{™} routers (ZR) are devices that are expected to be always active on the network and when not transmitting to have their radio in receive mode. Thus, their `children' (i.e., ZEDs) always count on their presence when waking up from a 'sleep mode' and when trying to reach the PAN through their parent. However, if a parent ZR is not always receiving, for example when it is absent from this channel, and instead servicing other channels or another PAN, the Zigbee^{™} child(ren) trying to reach it will count this situation as a link failure. This is expected to be a rare occurrence and the standard actions that the Zigbee^{™} child(ren) can take to reconnect to the network use power-hungry methods. Furthermore, when the parent ZR frequently is not listening on the Zigbee^{™} PAN/channel, such `link failure followed by network re-connection' methods will also drain more energy from the child Zigbee's (ZED's) battery, thereby reducing the battery operational life.

In order to address this problem, examples herein-described propose that the (parent ZR) delegates a subset of its layer-1/Layer-2 (L1/2) responsibilities to a trusted 'companion' Zigbee^{™} node for a duration of its absence from the Zigbee PAN, whilst servicing a different physical layer (P1) protocol. The trusted 'companion' Zigbee^{™} node receives at least one configuration parameter from a multiple-protocol PAN device, wherein the at least one configuration parameter comprises instructions to temporarily enable the companion PAN device, during periods of inactivity in supporting the at least one other communication protocol, to perform some functionality (i.e., a subset of the full Zigbee^{™} communication stack functionality) of the multiple-protocol PAN device, including receiving at least one medium access control, MAC, access request from at least one child device associated with the multiple-protocol PAN device. The companion' Zigbee^{™} device needs to be capable and available for performing the task (e.g., either a router device or an end-device in a receive-only mode of operation, is designated as a 'companion' Zigbee^{™} node. Thus, the 'companion' Zigbee^{™} node is configured to receive from a multi-PAN node a list of Zigbee^{™} 'children nodes' that are identified in its neighbour list. The neighbour list contains the addresses of the nodes that are subscribed to the parent replacement service that the 'companion' node (which, when the 'companion' Zigbee^{™} node is another ZED provides to their respective ZR parent). The 'companion' Zigbee^{™} node stores this neighbour list as a 'subscriber table' or subscriber list into its memory and uses it to validate the source MAC address of an incoming PAN data packet, in addition to the addresses found in its own neighbour table. Thereafter, during the multi-PAN node's absence, enquiries from child(ren) devices/nodes identified in the multi-PAN node's 'subscriber table' or subscriber list would be responded to by the 'companion' Zigbee^{™} node, on behalf of and in the name (e.g., address) of the child device's real parent.

In examples herein-described, the 'companion' Zigbee^{™} node is configured to receive at least a delegated medium access control (MAC) layer acknowledgement (ACK) procedure for the incoming PAN data packets from, say, a sub-set of the children devices/nodes and to store the received/ incoming PAN data packets until the parent device switches back to serve the Zigbee^{™} PAN. In this manner, the child(ren) devices/nodes no longer exhaust protocol re-tries, and ultimately enter into an 'orphan' state that will result in a network re-configuration when they attempt to rejoin the PAN, and excessive power consumption.

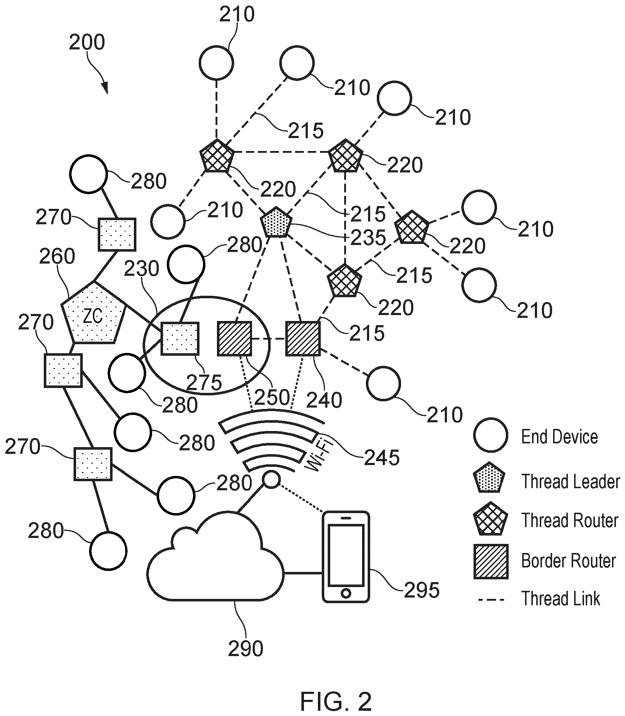

FIG. 2 illustrates a simplified representation of a radio subsystem 200 supporting Thread^{™} and Zigbee^{™} communications, according to some examples. It has been explained previously that a parent node in an 802.15.4 realm may be deemed a single point of failure for its children. The 802.15.4 specification provides for a mechanism to detect and to resolve a parent link failure, notwithstanding the approach is costly for battery-powered devices. In accordance with examples, a multiple-protocol PAN device 230 (which in this example is a dual-protocol Thread^{™}-Zigbee^{™} PAN device) is introduced into the radio subsystem 200 as a cost-effective node sharing the 802.15.4 radio subsystem for Thread^{™} and Zigbee^{™}.

A number of Thread^{™} end devices 210 communicate on the radio subsystem 200 via Thread^{™} links 215 and inter-connected Thread^{™} routers 220, some of which are connected to a Thread^{™} leader 235. Similarly, a number of Zigbee^{™} End devices (ZEDs) 280 communicate on the radio subsystem 200 via inter-connected Zigbee^{™} routers 270. It is known that Thread^{™} data packets transferred during over-the-air (OTA) or datagram transport layer security (DTLS) handshake messages are large. The duty cycle and data traffic flow of a Thread^{™}-Zigbee^{™} multiple-protocol PAN device 230 (i.e., functioning as a multi-protocol node in time-sharing the 802.15.4 radio) is influenced by the other network, e.g., Thread network topology. Thus, the servicing and processing of more Thread packets by the Thread^{™}-Zigbee^{™} multiple-protocol PAN device 230, is made at the expense of supporting the Zigbee PAN. A Thread^{™}-Zigbee^{™} multiple-protocol PAN device 230 comprises a Border Router 250 and a Zigbee^{™} router 275, respectively connected to one or more other Border Routers 240 and Zigbee^{™} routers 270, comprising inter-alia, a processor 272 and operably coupled to a memory 274. Border Routers 240, 250 provide a connection between the Thread end devices 210 and a cloud 290 and/or a mobile device 295 via a WiFi^{™} link 245, in this example. The Zigbee^{™} router 275 in the Thread^{™}-Zigbee^{™} multiple-protocol PAN device 230 is configured to discover a suitable (temporarily designated) 'companion' device, such as Zigbee^{™} 'companion' node 260, in order to securely communicate with it to configure a list of children that are to be served by the temporarily designated 'companion' device acting as a 'companion-parent', and to retrieve the received PAN data packets from this temporarily designated 'companion' device and provide a summary of the activity of those children for ageing purposes.

In some examples, the Thread^{™} end devices 210 communicating with the inter-connected Thread^{™} routers 220 on the radio subsystem 200 via Thread^{™} links 215 may represent a foundation of a Matter fabric deployment. In order for Matter applications to communicate with nodes from outside the Matter network, Matter bridges may be configured to perform protocol conversion between Zigbee^{™} and Matter. In such a scenario, the Matter bridge acts as an interpreter for the bridged devices (e.g., the Zigbee devices) and presents them as Matter devices to various Matter applications. As one example, for bridged devices that have a controlee role, the Matter node acting as Controller on the Matter fabric sends commands such as 'Off' to the bridge device(s) targeting the On/Off cluster of a bridged Zigbee device. The bridge device converts this command format from Matter to Zigbee ZCL and sends it to the destination Zigbee device in the Zigbee network.

Referring now to FIG. 3, an example of time division multiplexing scheduler 300 of a shared radio subsystem where the shared radio subsystem supports a Zigbee^{™} PAN and at least one further PAN, such as a Thread^{™} PAN is illustrated, according to some examples. The time division multiplexing scheduler 300 includes the timing of the protocol scheduler 310 that schedules/allocates periods of time 320, 322, 324 for multi-protocol devices to support the various protocols. The time division multiplexing scheduler 300 includes the timing of the multi-protocol devices to support Thread^{™} PAN 312, Zigbee^{™} PAN 314, any other PAN 316 and the operation of the multi-protocol device's radio subsystem accordingly, switching between receive and transmit frames 332, 342. As illustrated, the protocol scheduler 310 arranges for supporting the Thread^{™} PAN 312 to be active 330 in the first period of time 320, when the support of the Zigbee^{™} PAN 314 is configured to be `idle' 360. Thereafter, the protocol scheduler 310 arranges for supporting the Zigbee^{™} PAN 314 to be active 340 in the second period of time 322, when the support of the Thread^{™} PAN 312 is configured to be `idle' 360. Subsequently, the protocol scheduler 310 arranges for supporting the Thread^{™} PAN 312 (again) to be active 350 in a third period of time 324, when the support of the Zigbee^{™} PAN 314 is again configured to be `idle' 360. In this time division multiplexed manner, the protocol scheduler 310 arranges for support of multiple protocols.

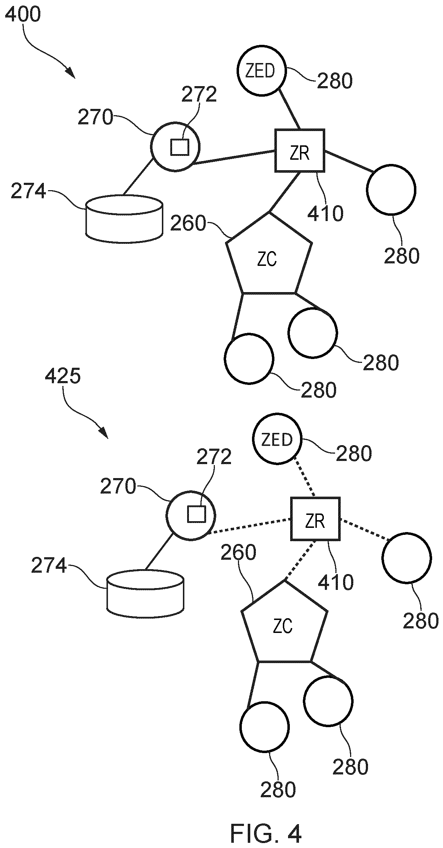

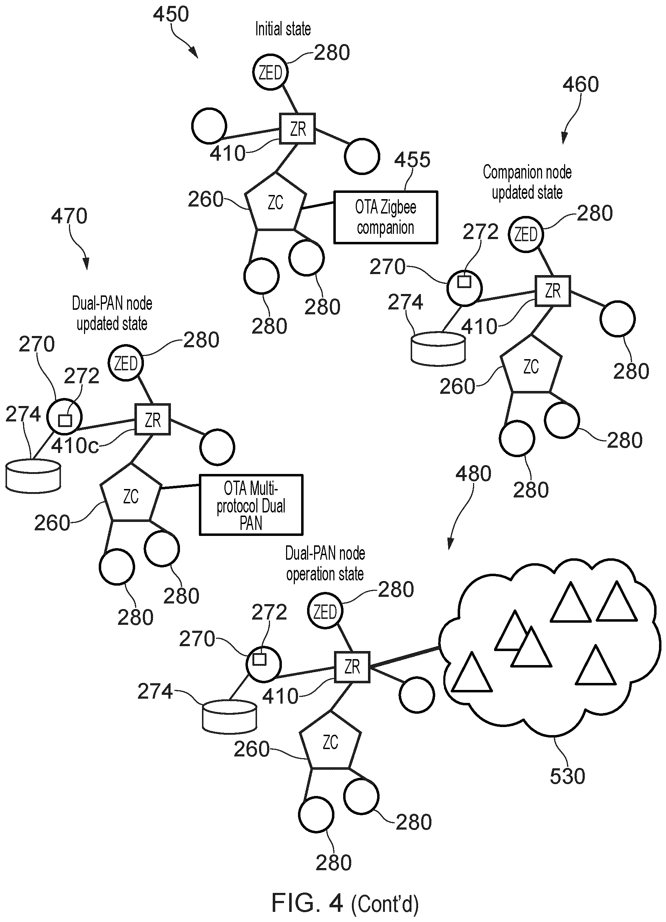

FIG. 4 illustrates further simplified representations 400, 425, of parts of a radio subsystem supporting Thread^{™} and Zigbee^{™} communications using a Zigbee^{™} PAN companion node, according to some examples. In this example, a Zigbee^{™} Router (ZR) 410 is co-located in the Zigbee^{™} PAN companion node and uses a single radio hardware (e.g., integrated circuit) to service both PAN/channels of the Thread^{™} network and Zigbee^{™} network. In accordance with some examples, whilst servicing the other PAN, for the Zigbee^{™} neighbour devices 260, 270, 280 the ZR 410 may look temporarily unreachable at a MAC level (not acknowledging PAN data packets sent directly to it), as presented in the second representation 425 with the links as dotted lines. The ZR 410 is configured to be able to query its stored Neighbor Table (NT), otherwise referred to as neighbour list whether any device within the radio subsystem has with `RX-On-When-Idle' capability, either a ZED (i.e., ZED child) 280, or a ZR sibling. Thus, a first representation 400 illustrates the communication links when the ZR 410 is active, and the second representation 425 illustrates the communication links when the ZR 410 becomes inactive (e.g., servicing the other protocol) and the links become dotted. In this scenario, the ZR 410 is unreachable using the first protocol. This 'RX-On-When-Idle' capability information is required by the Zigbee^{™} standard to be preserved by any ZR 410 in the NT. The ZR 410 is configured to be able to probe that ZED child 280 or ZR sibling by sending a dedicated command to the ZED child 280 or ZR sibling to determine whether the ZED child 280 or ZR sibling is capable of supporting the 'companion' role. In some examples, it is envisaged that the dedicated command may be an APS secured message to a manufacturer specific cluster identifier (ID), or a dedicated network (NWK)-layer command encrypted only with the network key.

In some examples, once the ZR 410 (co-located in the Zigbee^{™} PAN companion node) is informed by an application-specific protocol scheduler that the radio subsystem is allocated a longer time-slice to the other non-Zigbee^{™} PAN(s) (e.g. Thread^{™}), the ZR 410 is configured to be able to build a list of ZED to be subscribed to the 'companion' service (i.e., ZED children) 280 devices and will pass these to a designated companion node 270 through a dedicated command (e.g., a Zigbee^{™} cluster library (ZCL), Application Support Sublayer (APS), network (NWK) command), together with a timeout value after which the supporting activity of the companion role may be configured to end (referred to as 'subscriber table' or subscriber list herein). Here, memory 274 in designated companion node 270 is configured to store received packets until the parent node switches back to serve the Zigbee^{™} PAN', which is no longer requiring to be served by the 'companion' Zigbee^{™} node(s).

During a ZR's absence (noted as ZR 410 in the second representation 425 of FIG. 4), the designated companion node 270 may be enabled to reconfigure its radio receiver to accept a second network address, in addition to its own, for example the address of ZR 410. In some examples, if one ZED child 280 in the 'subscriber table' configured by the ZR 410 in the designated companion node 270 during a configuration phase, wakes up and has radio activity, the ZED child 280 may send a Data Request to reset an aging counter in its parent and query for pending messages. In this case, the designated companion node 270 may reply to the ZED child 280 with a MAC ACK with Frame Pending FP bit set to '0'. The companion node 270 does not have 'pending frames' to send to the ZED 280 because it is not its real parent ZR 410, which is the actual interface to the network. The designated companion node 270 only acknowledges the Data Poll received from ZED child 280 with a Frame Pending bit inside the MAC header set to '0', accordingly (see table 1 below: reference IEEE 802.15.4, section 7.2.1 'Frame Control Field').

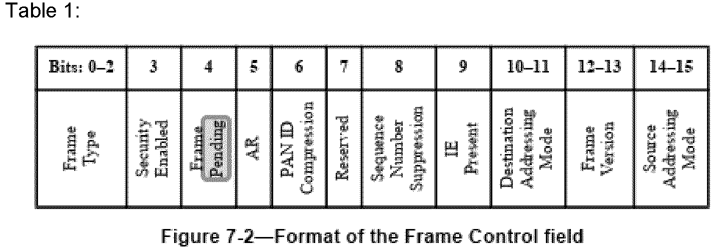

This will cause the sleepy ZED to go back to sleep. The ZED child 280 may, alternatively, send a Data Frame to its parent. In this case, the designated companion node 270 will receive the Data Frame and store it in an indirect queue in memory 274 in companion node 270 (to be replaced with its identifier) for the destination address of the ZR 410. For both cases above, the ZED child's 280 address will be marked as having had a successful radio activity.

In some examples, if any message is received from a MAC source address that is not found in the 'subscriber table', the designated companion node 270 shall inspect the network destination (NWK DST) address to look for a match in the 'subscriber table'. If a match is found, the designated companion node 270 understands that this received message (e.g., a PAN data packet) for one of the ZR's children, which was routed to the ZR's address by a neighbour router. In this scenario, it is envisaged that the designated companion node 270 may potentially store the received message for later delivery to that ZED child 280. However, in some instances, it is envisaged that following a consideration of the available memory' capacity of the designated companion node 270, the designated companion node 270 may also silently drop the received message and allow for re-transmissions from the neighbour router to occur.

In some examples, it is envisaged that the Zigbee^{™} PAN companion node 410 may be configured to briefly interrupt its Thread^{™} scheduled time-slot and switch to the Zigbee^{™} protocol as illustrated in FIG. 3, and interrogate the designated companion node 270 for an activity report, for example using a dedicated command. The status report may contain, for example, the following information: for each address in the subscriber table:
*< number of stored packets in the memory*/*queue* of designated companion node *270 from the ZED 280 to its parent ZR 410, TRUE*/*FALSE if the child 280 had a successful Data Request replied to by the* designated *companion node 270>.*

In some examples, it is envisaged that the ZR 410 is configured to be able to interrogate the designated companion node 270, once awoken, in order to obtain PAN data packets received at the designated companion node 270 from the ZR's 410 children. In response, the designated companion node 270 may replay/forward the stored PAN data packet(s) back to the ZR 410. In some examples, it is envisaged that this may be achieved with a dedicated command, or with a MAC Data Request having the MAC destination address (DST Addr.) = Address of the designated companion node 270, MAC source address (SRC Addr.) = Address of the ZR 410. In some examples, it is envisaged that Zigbee^{™} devices (e.g., ZEDs) may be configured to optionally support the reception of such PAN data packets, for example as defined in IEEE 802.15.4, Section 7.5.5 Data Request command, where it is stated: *'All devices, except for (Radio frequency transmitter devices) RFD-TX devices, shall be capable of transmitting this command, although an RFD is not required to be capable of receiving it.'*

In some examples, it is envisaged that the ZR 410 updates its own child aging structure, for example based on the Data Requests processed by processor 272 of the designated companion device 270 during its absence and proceed with any standard-based action resulting from it. In some examples, it is envisaged that the ZR 410 may also process and/or forward to the destination any PAN data packet received from its children that was retrieved from the designated companion node 270.

In some examples, it is envisaged that a device manufacturer may want to enhance an existing (initial) whole Zigbee^{™} network 450 with connectivity for new protocols (such as Matter/Thread^{™}). This process is performed by loading specific firmware images in the ZC and programming an Over-The-Air (OTA) upgrade of the targeted nodes. In the initial whole Zigbee^{™} network 450 state, the image firmware is called 'OTA Zigbee companion' 455 and the target is the designated companion nodes 270 in the other examples.

In one companion node updated state example 460, it is envisaged that the Zigbee^{™} designated companion node 270 is upgraded with the firmware image for companion capabilities of the potential targeted devices (e.g., all the powered Zigbee^{™} devices in the PAN). In this scenario, it is envisaged that border routers/nodes will transfer the packets of the new firmware pre-loaded onto Zigbee^{™} 'companion' node 260 through OTA re-programming, targeting the Zigbee^{™} designated companion node 270 to receive the update.

In some examples, it is envisaged that the Zigbee^{™} ZR 410 may also be loaded with the firmware for the multi-protocol PAN, network enhancement in 470, from the ZC's OTA process using the image called 'OTA multiple-protocol PAN' Here, a ZR node 410c receives an updated multiple-protocol firmware. Note that no physical modification was made to the ZR node 410c and, in this context new firmware was again received through over-the-air (OTA) re-programming and the ZR node 410c will run the multiple-protocol PAN with a single 802.15.4 radio integrated circuit, as was originally manufactured.

In some examples 480, it is envisaged that the freshly OTA-upgraded ZR 410 may be configured to operate as a multiple-protocol PAN device and the user builds/expands the ecosystem with a new expanded network 530 (the cloud and the triangles, where the illustrated triangles are the nodes running Matter/Thread protocol, other sensors, other appliances where the Matter Controllers from the newly added network may interact with the Zigbee^{™} devices from the initial network). In this manner, being a cost effective single 802.15.4 standard-compliant radio device, the upgraded ZR 410 must mitigate the risk that the former Zigbee^{™} network performance may be degraded by the new role of the multiple-protocol PAN device due to time-slicing of the protocols on the same single radio block, using the companion services.

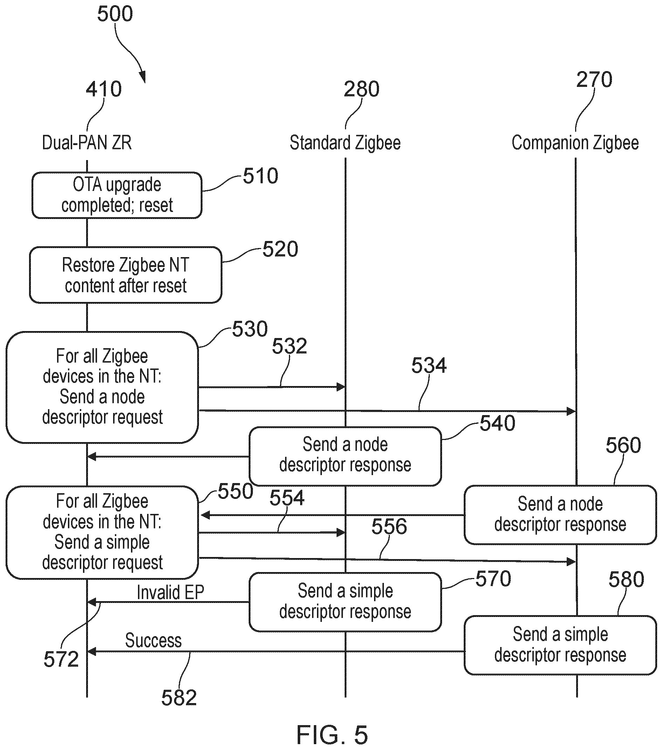

Referring now to FIG. 5, a simplified message sequence chart 500 is illustrated for identifying a suitable Zigbee^{™} companion node 270 in a radio subsystem supporting Thread^{™} and Zigbee^{™} communications, according to some examples. Here, illustrated in FIG. 5, a multiple-protocol PAN device that comprises a Zigbee^{™} Router 410 communicates with a Standard Zigbee^{™} device 280 and a Zigbee^{™} companion node 260. In this example, at 510, the multiple-protocol PAN device that comprises a Zigbee^{™} Router 410 receives an 'over-the-air (OTA)' upgrade of the image 'OTA Multi-protocol Pan' from FIG. 4 and in some examples performs a reset (which may be a hard-reset or a warm reset, and is a typical operation after an OTA process) to ensure the multiple-protocol PAN device that comprises a Zigbee^{™} Router 410 starts with the new image.

A standard ZR maintains a list of neighbors (e.g., in a neighbor table (NT)). The list identifies devices that used the standard ZR as a joining parent; and sibling ZRs that broadcast Link Status reports with their neighbors' list. In this example, the multiple-protocol PAN device that comprises a ZR 410 is configured to find a manufacturer-compatible node, at 530, based on the information provided by each of the scanned nodes in the radio subsystem. In this example, the multiple-protocol PAN device that comprises a Zigbee^{™} Router 410 sends at 532, 534 a node descriptor request, for example to obtain one or more of the following items of information:
- Node_descriptor::MAC_capabilities::Receiver On when Idle
- Node_descriptor::Manufacturer_Code
- Node_descriptor::Server_Mask

The Standard Zigbee^{™} device 280 sends a node descriptor response at 540 and the Zigbee^{™} companion node 260 also sends a node descriptor response at 560. At 550, the multiple-protocol PAN device that comprises a Zigbee^{™} Router 410 follows-up with sending at 554, 556, for all Zigbee^{™} devices in the NT, a simple descriptor request. The Standard Zigbee^{™} device 280 sends a simple descriptor response at 570 with the response being 'Invalid Endpoint (EP)' because the node does not support the companion service as it was not upgraded to support it, and the Zigbee^{™} companion node 260 also sends a simple descriptor response at 580 with 'Success' status code. In response, the multiple-protocol PAN device that comprises a Zigbee^{™} Router 410 selects the node returning `Success' for the `companion' service query at 582 and ignores the nodes returning an 'invalid endpoint' 572. A node descriptor request is sent followed by sending a simple descriptor request to all devices as the node descriptor request/response is a high-level query that provides very limited information about the destination node capabilities.

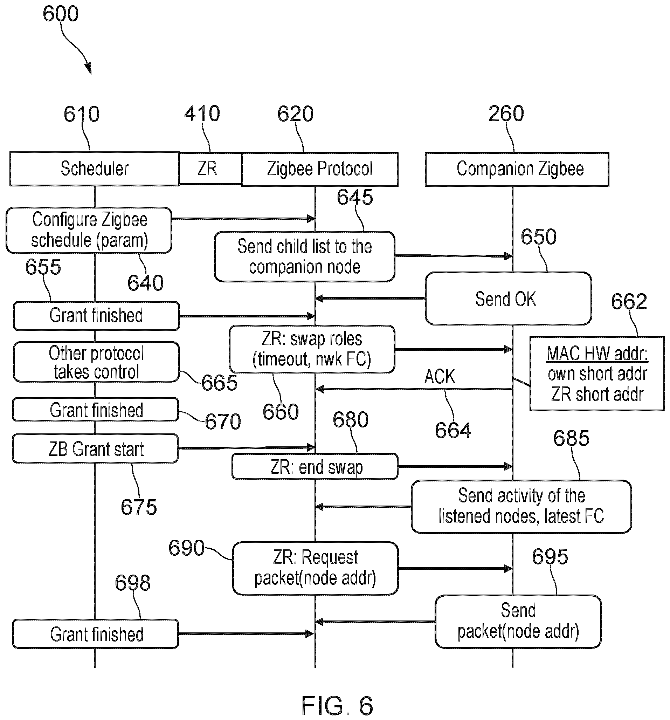

Referring now to FIG. 6, a simplified message sequence chart 600 is illustrated for configuring a suitable Zigbee^{™} companion node service in a radio subsystem supporting Thread^{™} and Zigbee^{™} communications, according to some examples. Here, illustrated in FIG. 6, a multiple-protocol PAN device that comprises a Zigbee^{™} Router 410 comprises a scheduler 610, which schedules the activity of individual protocols, pre-empting one ZR (namely multiple-protocol PAN device that comprises a Zigbee^{™} Router 410) to grant access to the other protocol(s) executed concurrently on the same physical node but on the other PAN (e.g., Thread), and a Zigbee^{™} protocol controller 620 configured to implement a Zigbee^{™} protocol and communicates with the Zigbee^{™} companion node 260. In this example, at 640, the scheduler 610 of the multiple-protocol PAN device that comprises a Zigbee^{™} Router 410 configures a Zigbee^{™} schedule parameter, for example the start time of the radio access grant for the Zigbee protocol and its duration, and informs the Zigbee^{™} protocol controller 620. At 645, upon receiving a scheduler configuration and a grant to access the radio part of the ZR410, the Zigbee^{™} protocol controller 620 sends a child list to the companion Zigbee^{™} node 260. This `child' list contains the MAC and NWK addresses of the children subscribed to the parent (substitute service) ZR, which is now provided by the 'companion' node that stores the list in its 'subscriber table'. At 650, the companion Zigbee^{™} node 260 acknowledges the child list and sends an acknowledgement message that the Zigbee^{™} companion node has received the child list message back to the Zigbee^{™} protocol controller 620. At 655, the scheduler 610 sends a 'radio access grant finished' message to the Zigbee^{™} protocol controller 620. Thus, the scheduler 610 grants access to a single radio block; where the multiple supported protocols use/share the same radio block and have to be scheduled/synchronized between themselves. In response, the Zigbee^{™} protocol controller 620 configured to implement a Zigbee^{™} protocol sends a message at 660 to the Zigbee^{™} companion node 260 to 'activate service' i.e., to convert a standard ZR to a companion Zigbee^{™} ZR, where the message includes one or more of: a maximum time duration for the activity period of companion service in node 260, network Frame Counter (FC). The network FC parameter configured by the ZR 410 in its message is the last frame counter used by the ZR 410 in its outgoing Zigbee network layer PAN data packets. All the outside nodes that receive incoming encrypted network PAN data packets from ZR 410 must store this identifier, as this is used in the security decryption process of Zigbee (as detailed in the Zigbee^{™} standard in section 4.3.1.2 'Security Processing of Incoming Frames'). In some examples, the 'activate service' command may be at least NWK secured.

At 662, the Zigbee^{™} companion node 260 received and stored medium access control (MAC) hardware (HW) address (addr.): its own MAC short addr., a ZR MAC short addr. The Zigbee network MAC (short) address is a 16-bits identifier allocated by the parent of a Zigbee joining node (ZR or ZED). After the joining is completed, the Zigbee nodes use the network address in their addressing fields, source and destination. The Zigbee^{™} companion node 260, upon receiving this notification, configures its MAC receiver to be able to receive frames for its own MAC address but also for the ZR's address. The Zigbee^{™} companion node 260 then acknowledges this implementation, at 664, back to the Zigbee^{™} protocol controller 620. In some examples, it is envisaged that this phase of communications between the Zigbee^{™} companion node 260 and the Zigbee^{™} protocol controller 620 may comprise multiple exchanged messages in order to complete the configuration.

Referring back to 655, the scheduler 610 signals to the Zigbee^{™} protocol controller 620 that its allocated time granted to access the radio has finished or is about to be finished and the Zigbee^{™} protocol controller 620 must terminate its ongoing radio activities. One last operation is performed 660 and then the other protocol takes control of the radio 665 because the radio access granted has finished. At 670, when the duration of the other protocol's radio access has ended, the scheduler 610 sends a Zigbee grant start 675 message to the Zigbee^{™} protocol controller 620. At 680, the Zigbee^{™} protocol controller 620 sends a message 680 to the Zigbee^{™} companion node 260 to indicate the termination of the service. Thus, under the command of the scheduler 610, when the Zigbee^{™} protocol is activated again, the Zigbee^{™} companion node 260 is notified by the ZR that the companion active period ended, and replies with the activity summary received during its operation and the last NWK frame counter used. In response thereto, the Zigbee^{™} companion node 260, at 685, the Zigbee^{™} companion node 260 sends an activity report of the nodes configured to be supported/monitored in the configuration message 645, a latest network Frame Counter if the companion node had to use it and increment it in response to any network commands of nodes 280, such as Zigbee End Device Timeout Request, to the Zigbee^{™} protocol controller 620. In some examples, it is envisaged that the Zigbee^{™} protocol controller 620 then sends a ZR request of a PAN data packet (including the node address) at 690 to the Zigbee^{™} companion node 260, which is responded to with the PAN data packet (including the node address) by the Zigbee^{™} companion node 260 at 695. At 698, the scheduler 610 acknowledges that the grant of the radio block is finished. In some examples, it is envisaged that the Zigbee^{™} protocol controller 620 may optionally be configured to extract the received messages from the Zigbee^{™} companion node 260, if they were stored. In some examples, it is envisaged that when the ZR's granted access to the radio block is about to end (either gracefully terminating its previously configured duration, or abruptly interrupted through a signal of 'grant finished'), the Zigbee^{™} protocol controller 620 may signal the Zigbee^{™} companion node 260 that a period of companion service activation shall start. Thus, the Zigbee^{™} companion node 260 approach described above is useful for a scheduling scenario as the multiple-protocol PAN device that comprises a Zigbee^{™} router is able to obtain a status report of radio events occurring during its absence and infer possible unsynchronized operations or clock drift.

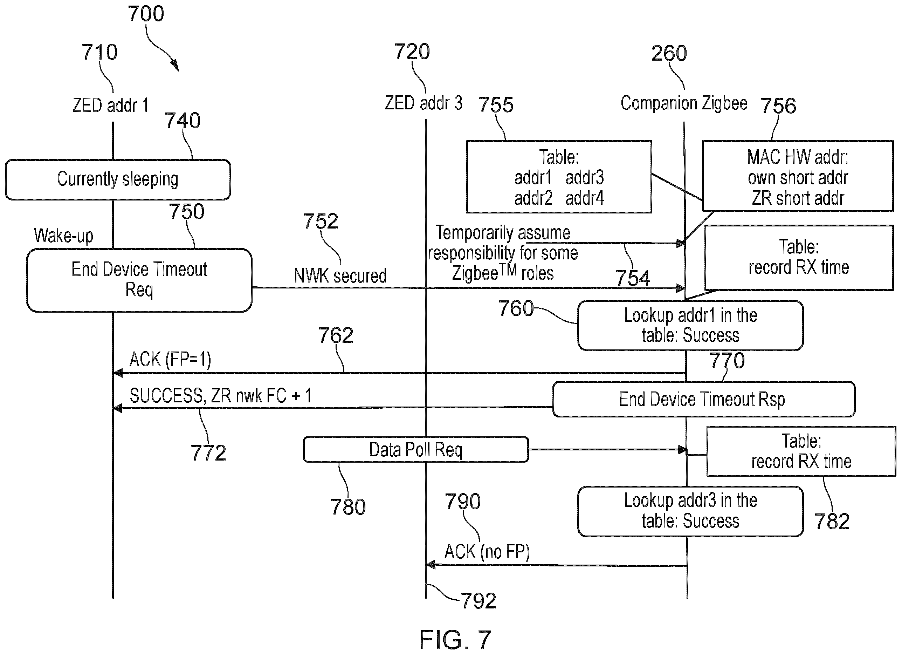

Referring now to FIG. 7, a simplified message sequence chart 700 is illustrated for supporting a Zigbee^{™} companion service in a radio subsystem supporting Thread^{™} and Zigbee^{™} communications, according to some examples. Here, illustrated in FIG. 7, a first ZED 710 with a first address is communicating with a Zigbee^{™} companion node 260 as its parent (instead of a ZR, such as ZR 410 in FIG. 4) and a third ZED 720 with a third address is also communicating with Zigbee^{™} companion node 260 as its parent (instead of a ZR, such as ZR 410 in FIG. 4).

In this example, therefore, the ZR 410 has previously completed the configuration of the Zigbee^{™} companion node 260, for example as at 645 in FIG. 6. The internal configuration of the Zigbee^{™} companion node 260 comprises a companion/subscriber table 755 of four addresses and the medium access control (MAC) hardware (HW) address (addr.): its own network MAC short addr., a ZR network MAC short addr. and a table of recorded receiver (RX) time 757. The two tables, companion/subscriber table 755 and table of recorded receiver (RX) time 757, as well as the MAC HW address, are internal configuration/data structures of the Zigbee^{™} companion node 260 filled in by the ZR 410. The lines that attach those blocks to the vertical line of 260 are not activity or action lines but lines that show that some structure belong to Zigbee^{™} companion node 260, e.g., is internal to it. Thus, in this manner, the service maintains a list of MAC short addresses 755 received from the ZR 410, of the children nodes expecting uninterrupted operation from their parent for network interaction (otherwise referred to as a 'subscriber table'). It also configures its IEEE 802.15.4 radio portion to be able to receive MAC frames 756 having the destination address set for its own MAC short address, or the ZR's MAC short address, once it received a 'service activation' command 754 from a ZR (not shown) acting as the parent for the first ZED 710 and third ZED 720, i.e., starts the temporary assuming responsibility for some (e.g., a protocol subset of) Zigbee^{™} roles of a parent Zigbee^{™} router/device, e.g., time-out configuration, data polling, data reception, frame counting (FC), caching ...

The ZEDs 710, 720 are currently sleeping at 740 and could wake up when the ZR is actively servicing their channel and PAN-ID, which case is the standard Zigbee^{™} operation. Similarly, the ZEDs 710, 720 may wake up when the ZR services the other PAN/protocol using its own single physical radio block. The first ZED 710 performs a child keep-alive procedure (Zigbee^{™} standard chapter 3.6.10) sending one of the frames that were supported, e.g., a MAC Data Poll by the third ZED 720 at 780 or as illustrated at 750 an End Device Timeout Request, sent by the first ZED 710 to the Zigbee^{™} companion node 260. The ZR cannot respond and it has activated the companion service in the other Zigbee^{™} node, the secondary MAC address configured by the latter therefore allows it to receive the End Device Timeout Req from ZED addr. 1 at 760. The Zigbee^{™} companion node 260 identifies that the received PAN data packet is not broadcast and neither for its own address, but for the ZR. The Zigbee^{™} companion node 260 validates that addr1 is found in the companion table 755 configured by ZR and sends a MAC ACK (Frame Pending bit set to 1) at 762, as well as End Device Timeout Response (SUCCESS) at 770, 772. In some examples, the network message may be secured/encrypted 752, and the End Device Timeout Response 772 will also be secured using a network-wide network key and the ZR's outgoing FC + 1 (stored from the previously received 'activate service' command), and the ZR's MAC short address as source. The Zigbee^{™} companion node 260 stores the time (granularity is an implementation choice) since the last activation of the service, for the ZED 1's activity in recorded receiver (RX) time table 757. This is to be later used by the ZR, when returns to service this PAN/channel, and retrieves the activity report from its companion node, to update its own state for end device timeout. In the second example, the third ZED 720 performs a simple MAC Data Poll 780 to which it is replied with a look-up success at 790 with a MAC ACK without the Frame Pending bit set 792. In some alternative examples, it is envisaged that it may be understood that any frame received using the ZR's address as destination, but which fails the source address lookup in the companion table 755, may not replied to and neither acknowledged.

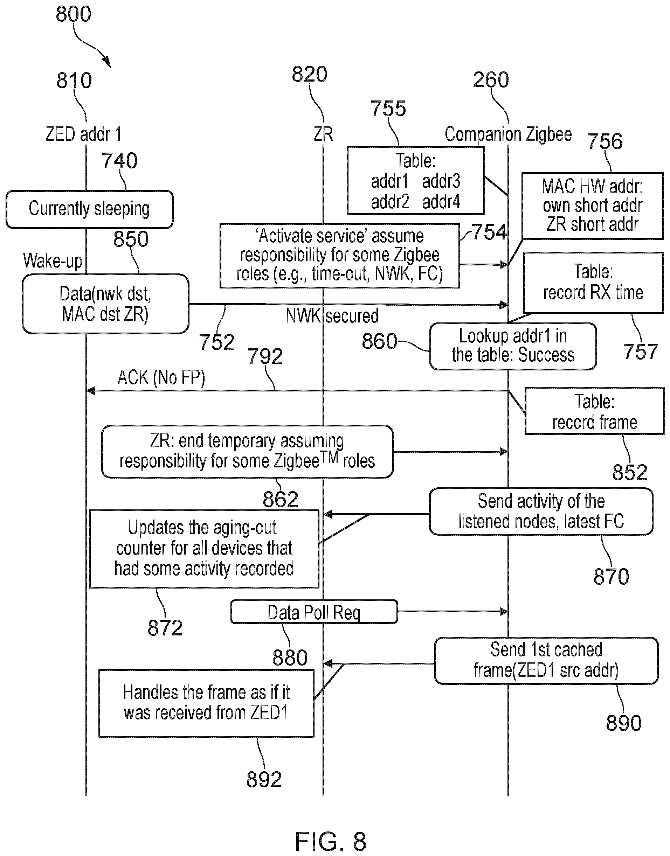

Referring now to FIG. 8, a simplified message sequence chart 800 is illustrated for supporting frame caching in a Zigbee^{™} companion service in a radio subsystem supporting Thread^{™} and Zigbee^{™} communications, according to some examples. Again, in a similar manner as FIG. 7, a first ZED 810 with a first address is initially communicating with another Zigbee node in the network (not shown), via its parent ZR 820 until a Zigbee^{™} companion node 260 starts temporarily assuming responsibility for some Zigbee^{™} roles of the parent ZR 820, e.g., time-out configuration, FC .... As previously illustrated, the ZEDs 710, 720 in FIG. 7 have joined a Zigbee^{™} PAN identifier (ID) using ZR as parent. In this example, the parent ZR 820 has completed the configuration of the Zigbee^{™} companion node 260 (as described in FIG. 6, at 645), and the internal configuration of the Zigbee^{™} companion node 260 comprises a companion/subscriber table 755 of 4 addresses, and the Zigbee^{™} companion node 260 comprises: a stored medium access control (MAC) hardware (HW) address (addr.): its own MAC short addr., a parent ZR 820 MAC short addr. and a table of recorded receiver (RX) time 757. Thus, in this manner, the service maintains a list of MAC short addresses in companion table 755 received from the parent ZR 820 through an 'activate service' command, of the children nodes expecting uninterrupted operation from their parent for network interaction (previously referred to as 'subscriber table'). It also configures its IEEE 802.15.4 radio portion to be able to receive MAC frames 756 having the destination address set for its own MAC short address, or the parent ZR's 820 MAC short address, once it received an 'activate service' command 754 to start the temporary assuming responsibility for some Zigbee^{™} roles, e.g., time-out configuration, FC...

The ZED 810 with a first address is currently sleeping at 740 and could wake up when the ZR is actively servicing their channel and PAN-ID, which case is the standard Zigbee^{™} operation. Similarly, the ZED 810 with a first address may wake up when the ZR services the other PAN/protocol using its own single physical radio block. At 850, the first ZED 810 with a first address wakes up and sends a data frame (network, dst, MAC dst ZR) towards a NWK destination address using the ZR's MAC short address as a destination of the next hop. In Zigbee^{™}, the routers have a routing table at the Network layer that allows them, as initiator of a transmission towards a NWK address, to determine the next MAC layer hop to which to send the PAN data packet to. Thus, the router uses that address as a MAC destination address in the MAC header of the PAN data packet (whilst the network header destination address contains the final target NWK address). The Zigbee End Device does not have this routing table. In contrast the ZED has to rely on their router parent to determine how to route their PAN data packet towards the destination address/node. Thus, ZEDs always send their PAN data packets using their parent as the first hop, and therefore fill the MAC destination address in the MAC header of the transmitted PAN data packet with their parent address.

The Zigbee^{™} companion node 260 receives the data frame since the ZR is servicing the other PAN/channel and looks up the address at 860. The Zigbee^{™} companion node 260 identifies that the received PAN data packet is not broadcast and neither for its own address, but for the ZR. It validates that addr1 is found in the companion table 755 at 852, configured by ZR and sends a MAC ACK (Frame Pending bit set to 0) at 792. The Zigbee^{™} companion node 260 stores the time (granularity is an implementation choice) since the last activation of the service, for ZED 1's activity in recorded receiver (RX) time table 757. This is to be later used by the parent ZR 820, when returns to service this PAN/channel, and retrieves the activity report reply from its Zigbee^{™} companion node 260, in order to update its own state for end device timeout.

In a first example, the parent ZR 820 returns to service and ends the service activation period, at 862 i.e., ends the temporary assuming responsibility for some Zigbee^{™} roles. It receives the activity report reply in form of an activity summary at 870 of the nodes configured to be monitored in the 'subscriber table', as well as the most recent NWK Frame Counter used by the companion Zigbee^{™} node 260 (if used) in its role. At 872, the parent ZR 820 will update its outgoing NWK frame counter to be higher than the one received. If the companion Zigbee^{™} node 260 has used the parent ZR's 820 outgoing NWK frame counter during its service, the ZED 810 that received this communication (e.g., the End Device Timeout Response (SUCCESS) message 770 from FIG. 7) will store the incremented NWK frame counter from that PAN data packet (for example see Zigbee standard, section 4.3.1.2, step 6). The companion Zigbee^{™} node 260 will expect that the next network-encrypted frames from the parent ZR 820 would have an incremented value for the frame counter, otherwise the companion Zigbee^{™} node 260 will reject the frame. Thus, it is important that when the parent ZR 820 services the Zigbee PAN again, it would do so with an updated frame counter larger than the last frame counter used by its Zigbee^{™} companion node 260. The parent ZR 820 will also use the information in the activity summary to update the aging counters associated with each of its children ZED, based on the timing information of the detected activity of ZED with the companion node 260 (see for example Zigbee standard, section 3.6.10).

If there are data frames cached in the Zigbee^{™} companion node 260, the parent ZR 820 determines their number N, and initiates their extraction. MAC Data Poll request command is a possible mechanism to use. In a second example, the parent ZR 820 performs a simple MAC Data Poll 880 to which it is replied with a first cached data frame of the first ZED 810 (source address) at 890. Thereafter, the parent ZR 820 handles the data frame as if it was received from the first ZED 810 at 892.

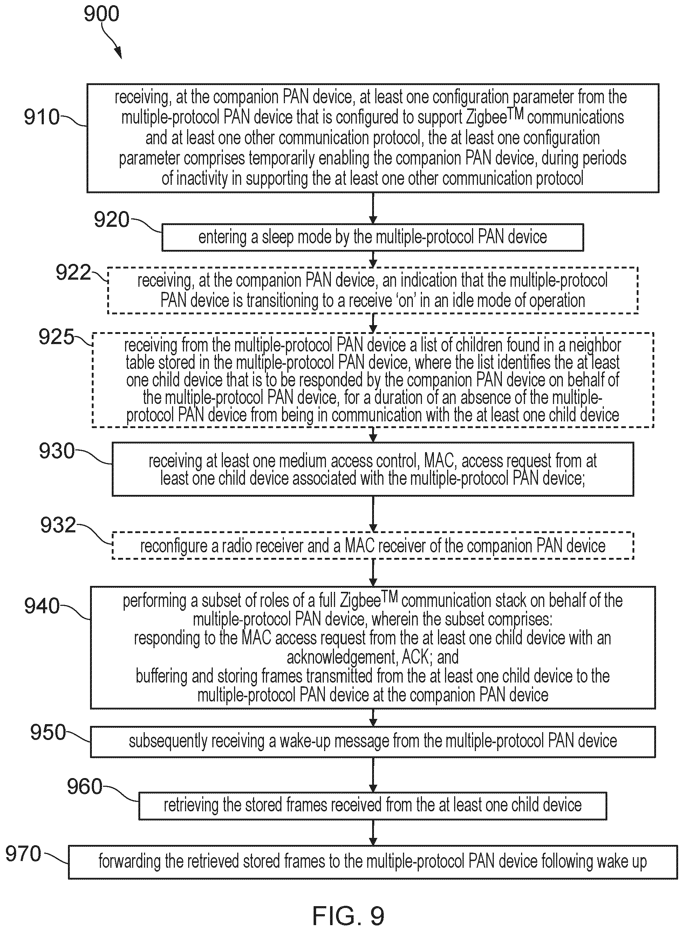

FIG. 9 illustrates a simplified flowchart 900 of a method for delegating PAN responsibilities to a companion PAN device configured to support Zigbee communications from a multiple-protocol PAN device. The method comprises, at 910, receiving, at the companion PAN device, at least one configuration parameter from the multiple-protocol PAN device that is configured to support Zigbee^{™} communications and at least one other communication protocol. At 920, the method comprises entering a sleep mode by the multiple-protocol PAN device. The at least one configuration parameter comprises instructions to temporarily enable the companion PAN device, during periods of inactivity in supporting the at least one other communication protocol, to perform the following: at 930, receiving at least one medium access control, MAC, access request from at least one child device associated with the multiple-protocol PAN device; and at 940, performing a subset of roles of a full Zigbee^{™} communication stack on behalf of the multiple-protocol PAN device, wherein the subset of roles comprises: responding to the MAC access request from the at least one child device with an acknowledgement, ACK; and buffering and storing frames transmitted from the at least one child device to the multiple-protocol PAN device at the companion PAN device. At 950, the method further comprises the companion PAN device subsequently receiving a wake-up message from the multiple-protocol PAN device; at 960 retrieving the stored frames received from the at least one child device; and at 970 forwarding the retrieved stored frames to the multiple-protocol PAN device following wake up.

In some examples, it is envisaged that the method may be performed by a Zigbee^{™} PAN companion node supporting Thread^{™} and Zigbee^{™} and capable of being adapted to temporarily use the services of a replacement parent for one or more child (Zigbee^{™} end devices), which provides a subset of roles of a full Zigbee^{™} communication stack. A PAN system comprising the Zigbee^{™} PAN companion node and a (parent) router/ multiple-protocol PAN device to temporarily transfer those 'parent' responsibilities and a plurality of child devices. The Zigbee^{™} PAN companion node comprises a processor and memory configured to carry out the above-described method.

In some examples, it is envisaged that a non-standard NWK/APS command may be another implementation option, where each N cached frames are extracted using the same method. In some alternative examples, it is envisaged that it may be understood that any data frame received using the ZR's address as destination, but which fails the source address lookup in the companion table 755, may not replied to and neither acknowledged.

The following detailed description is merely illustrative in nature and is not intended to limit the examples of the subject matter or the application and uses of such examples. As used herein, the word 'example' means 'serving as an example, instance, or illustration.' Any implementation described herein as an example is not necessarily to be construed as preferred or advantageous over other implementations.

As the convergence of loT protocols (such as such as Thread, Zigbee, etc.) evolves, supporting each of the communication protocols in multiple-protocol PAN devices or multiple-PAN devices (if more than two protocols are supported) has previously required full independent communication stacks being supported, and often executed concurrently on a single device. In the case of devices having a single IEEE 802.15.4 radio subsystem, the radio activity of the said protocols can only be time-frequency or code-interleaved and their access to this subsystem is alternatively granted by a manufacturer-specific protocol scheduler. In order to improve this scenario, an innovative approach to a multi-protocol device is described herein, (said 'companion Zigbee^{™} device 260') whose capabilities allow it to run a subset of roles of a full Zigbee^{™} communication stack on behalf of (e.g. by impersonating) the multiple-protocol PAN device, in addition to the entire Zigbee protocol it runs as a stand-alone entity in the Zigbee^{™} network.

The present disclosure is suited for PAN-based systems and products that suffer from being required to support multi-protocol operations on a single device. In particular, the method described above may be used when a device is required to support two different MAC protocols, where the device is required to support the most demanding timing constraints of each protocol. It is envisaged that the method can also be applied to other applications.

In the foregoing specification, the description has been explained with reference to specific examples. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example in one embodiment, the illustrated examples may be implemented as circuitry located on a single integrated circuit or within a same device. In some examples, the various components within the processor can be realized in discrete or integrated component form, with an ultimate structure therefore being an application-specific or design selection. As the illustrated examples may, for the most part, be implemented using electronic components and circuits known to those skilled in the art, details will not be explained in any greater extent than that considered necessary as illustrated below, for the understanding and appreciation of the underlying concepts and in order not to obfuscate or distract from the teachings thereof. A skilled artisan will appreciate that the level of integration of processor circuits or components may be, in some instances, implementation-dependent.

Also, for example, the examples, or portions thereof, may implemented as soft or code representations of physical circuitry or of logical representations convertible into physical circuitry, such as in a hardware description language of any appropriate type. Also, the description is not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method (900) for delegating personal access network, PAN, responsibilities to a companion PAN device from a multiple-protocol PAN device, the method comprising:
receiving (910), at the companion PAN device, at least one configuration parameter from the multiple-protocol PAN device that is configured to support Zigbee^{™} communications and at least one other communication protocol; and
entering (920) a sleep mode by the multiple-protocol PAN device;
wherein the at least one configuration parameter comprises instructions to temporarily enable the companion PAN device, during periods of inactivity in supporting the at least one other communication protocol, to perform the following:
receiving (930) at least one medium access control, MAC, access request from at least one child device associated with the multiple-protocol PAN device; and
performing (940) a subset of roles of a full Zigbee^{™} communication stack on behalf of the multiple-protocol PAN device, wherein the subset of roles comprises:
responding to the MAC access request from the at least one child device with an acknowledgement, ACK; and
buffering and storing frames transmitted from the at least one child device to the multiple-protocol PAN device at the companion PAN device;
wherein the method further comprises the companion PAN device:
subsequently receiving (950) a wake-up message from the multiple-protocol PAN device;
retrieving (960) the stored frames received from the at least one child device; and
forwarding (970) the retrieved stored frames to the multiple-protocol PAN device following wake up.

2. The method (900) of claim 1, wherein temporarily enabling the companion PAN device for performing the subset of roles of the full Zigbee^{™} communication stack comprises temporarily enabling the companion PAN device to assume physical layer, L1, and data link layer, L2 responsibilities on behalf of the multiple-protocol PAN device for a duration of its absence from being in communication with the at least one child device, where the subset of roles of a full Zigbee^{™} communication stack comprises at least one from a group of: time-out configuration, data polling, data reception, frame counting, FC, Caching.

3. The method (900) of claim 1 or claim 2, wherein entering (920) a sleep mode by the multiple-protocol PAN device further comprises receiving (922), at the companion PAN device, an indication that the multiple-protocol PAN device is transitioning to a receive 'on' state in an idle mode of operation, and receiving (925) from the multiple-protocol PAN device a list of children found in a neighbor table stored in the multiple-protocol PAN device, where the list identifies the at least one child device that is to be responded by the companion PAN device on behalf of the multiple-protocol PAN device, for a duration of an absence of the multiple-protocol PAN device from being in communication with the at least one child device.

4. The method (900) of any preceding claim, wherein in response to receiving (930) a MAC access request from the at least one child device associated with the multiple-protocol PAN device, the method further comprises reconfiguring (932) by the companion PAN device a radio receiver and a MAC receiver of the companion PAN device to receive frames for its own MAC address and a MAC address of the multiple-protocol PAN device for a duration of an absence of the multiple-protocol PAN device from being in communication with the at least one child device.

5. The method (900) of any of preceding Claims 3 or 4, further comprising retrieving securely, by the multiple-protocol PAN device from the companion PAN device, PAN data packets previously received by the companion PAN device for the at least one child device and an activity summary of the at least one child device.

6. The method (900) of any preceding Claim, wherein the at least one child device comprises a plurality of Zigbee^{™} end devices, ZED, children and the multiple-protocol PAN device determines that a time-slice allocated to at the least one other communication protocol for communications provides time for the multiple-protocol PAN device to build an address list of the plurality of ZED children and send the address list to the companion PAN device using a dedicated command together with a timeout value after which the supporting activity of the multiple-protocol PAN device role by the companion PAN device is to end.

7. The method (900) of any of preceding Claims 3 to 6, wherein the companion PAN device is further configured to receive a PAN data packet from at least one child device, and in response thereto:
validating that an address in a data message is located in a subscriber list configured by the multiple-protocol PAN device;
sending to the at least one child device, either:
(i) a MAC ACK without a Frame Pending bit set in response to a MAC Data Poll message sent by the at least one child device;
(ii) a MAC ACK with a Frame Pending FP bit set to '1',
(iii) a network-encrypted end device Timeout Response success message, using an outgoing frame counter, FC, '+ 1' value of the multiple-protocol PAN device that had been stored in response to a previously received at least one configuration parameter; and a MAC short address of the multiple-protocol PAN device as a source address; and
storing an updated time since a last activation of an activity service for the at least one child device.

8. The method (900) of any of preceding Claims 3 to 7, wherein the companion PAN device is further configured to receive a PAN data packet from at least one child device identified in a subscriber list, and performing at least one of, in response to:
receiving a Data Request to reset an aging counter in the multiple-protocol PAN device and receiving a query for pending messages, configuring the companion PAN device to send a MAC ACK with a Frame Pending FP bit set to '0', thereby causing the at least one child device to return to a sleep mode;
receiving a data frame sent to the multiple-protocol PAN device, configuring the companion PAN device to store the received data frame in an indirect queue for a destination address of the multiple-protocol PAN device.

9. The method (900) of Claim 8, further comprising marking, by the companion PAN device the address of the at least one child device as having had a successful radio activity.

10. The method (900) of Claim 8 or Claim 9, further comprising, at the companion PAN device:
receiving a request from the multiple-protocol PAN device for data frames received by the companion PAN device from children of the multiple-protocol PAN device; and
retrieving from memory the stored data frames and sending the stored data frames to the multiple-protocol PAN device.

11. The method (900) of Claim 10, wherein the request from the multiple-protocol PAN device comprises one of:
a dedicated, network-secured command, or
a MAC Data Request having a MAC destination address of the companion PAN device,
a MAC source address of the the multiple-protocol PAN device.

12. The method (900) of claim 11, further comprising, by a scheduler of the companion PAN device:
identifying when a Zigbee^{™} protocol is activated again by the multiple-protocol PAN device that indicates an end to a service activation period; and
scheduling sending to the multiple-protocol PAN device at least one of: stored Data Frames, an activity summary received during an operation by the companion PAN device, a last network frame counter used.

13. The method (900) of any preceding Claim wherein the at least one other communication protocol in the multiple-protocol PAN device is at least one of: a Thread^{™} communication protocol, a protocol based on IEEE 802.15.4 medium access control layer, a protocol based on IEEE 802.15.4 physical layer.

14. A personal access network, PAN, system comprising:
a Zigbee^{™} PAN companion node configured to support Zigbee^{™} communications and adapted to temporarily transition to being a replacement parent Zigbee^{™} device having one or more child Zigbee^{™} end devices having been provided a subset of roles of a full Zigbee^{™} communication stack on behalf of the multiple-protocol PAN device;
a multiple-protocol PAN device configured to support Zigbee^{™} communications and at least one other communication protocol and temporarily transfer a portion of its parent responsibilities to the Zigbee^{™} PAN companion device, the Zigbee^{™} PAN companion device comprising:
a memory (274); and
a processor (274) configured to carry out the method according to any of claims 1 to 13.

15. A PAN companion device configured to support Zigbee^{™} communications and at least one other communication protocol and adapted to temporarily transition to being a replacement parent Zigbee^{™} device having one or more child Zigbee^{™} end devices, wherein the PAN companion device comprises a memory; and a processor configured to carry out the method according to any of preceding Claims 1 to 13.

## Amended claims

### Amended claims in accordance with Rule 137(2) EPC.

1. A method (900) for delegating personal access network, PAN, responsibilities to a companion PAN device (620) from a multiple-protocol PAN device (410), the method comprising:
receiving (910), at the companion PAN device, at least one configuration parameter from the multiple-protocol PAN device that is configured to support Zigbee^{™} communications and at least one other communication protocol; and
entering (920) a sleep mode by the multiple-protocol PAN device;
wherein the at least one configuration parameter comprises instructions to temporarily enable the companion PAN device, during periods of inactivity in supporting the at least one other communication protocol, to perform the following:
receiving (930) at least one medium access control, MAC, access request from at least one child device associated with the multiple-protocol PAN device; and
performing (940) a subset of roles of a full Zigbee^{™} communication stack on behalf of the multiple-protocol PAN device, wherein the subset of roles comprises:
responding to the MAC access request from the at least one child device with an acknowledgement, ACK; and
buffering and storing frames transmitted from the at least one child device to the multiple-protocol PAN device at the companion PAN device;
wherein the method further comprises the companion PAN device:
subsequently receiving (950) a wake-up message from the multiple-protocol PAN device;
retrieving (960) the stored frames received from the at least one child device; and
forwarding (970) the retrieved stored frames to the multiple-protocol PAN device following wake up.

2. The method (900) of claim 1, wherein temporarily enabling the companion PAN device for performing the subset of roles of the full Zigbee^{™} communication stack comprises temporarily enabling the companion PAN device to assume physical layer, L1, and data link layer, L2 responsibilities on behalf of the multiple-protocol PAN device for a duration of its absence from being in communication with the at least one child device, where the subset of roles of a full Zigbee^{™} communication stack comprises at least one from a group of: time-out configuration, data polling, data reception, frame counting, FC, Caching.

3. The method (900) of claim 1 or claim 2, wherein entering (920) a sleep mode by the multiple-protocol PAN device further comprises receiving (922), at the companion PAN device, an indication that the multiple-protocol PAN device is transitioning to a receive 'on' state in an idle mode of operation, and receiving (925) from the multiple-protocol PAN device a list of children found in a neighbor table stored in the multiple-protocol PAN device, where the list identifies the at least one child device that is to be responded by the companion PAN device on behalf of the multiple-protocol PAN device, for a duration of an absence of the multiple-protocol PAN device from being in communication with the at least one child device.

4. The method (900) of any preceding claim, wherein in response to receiving (930) a MAC access request from the at least one child device associated with the multiple-protocol PAN device, the method further comprises reconfiguring (932) by the companion PAN device a radio receiver and a MAC receiver of the companion PAN device to receive frames for its own MAC address and a MAC address of the multiple-protocol PAN device for a duration of an absence of the multiple-protocol PAN device from being in communication with the at least one child device.

5. The method (900) of any of preceding Claims 3 or 4, further comprising retrieving securely, by the multiple-protocol PAN device from the companion PAN device, PAN data packets previously received by the companion PAN device for the at least one child device and an activity summary of the at least one child device.

6. The method (900) of any preceding Claim, wherein the at least one child device comprises a plurality of Zigbee^{™} end devices, ZED, children and the multiple-protocol PAN device determines that a time-slice allocated to at the least one other communication protocol for communications provides time for the multiple-protocol PAN device to build an address list of the plurality of ZED children and send the address list to the companion PAN device using a dedicated command together with a timeout value after which the supporting activity of the multiple-protocol PAN device role by the companion PAN device is to end.

7. The method (900) of any of preceding Claims 3 to 6, wherein the companion PAN device is further configured to receive a PAN data packet from at least one child device, and in response thereto:
validating that an address in a data message is located in a subscriber list configured by the multiple-protocol PAN device;
sending to the at least one child device, either:
(i) a MAC ACK without a Frame Pending bit set in response to a MAC Data Poll message sent by the at least one child device;
(ii) a MAC ACK with a Frame Pending FP bit set to '1',
(iii) a network-encrypted end device Timeout Response success message, using an outgoing frame counter, FC, '+ 1' value of the multiple-protocol PAN device that had been stored in response to a previously received at least one configuration parameter; and a MAC short address of the multiple-protocol PAN device as a source address; and
storing an updated time since a last activation of an activity service for the at least one child device.

8. The method (900) of any of preceding Claims 3 to 7, wherein the companion PAN device is further configured to receive a PAN data packet from at least one child device identified in a subscriber list, and performing at least one of, in response to:
receiving a Data Request to reset an aging counter in the multiple-protocol PAN device and receiving a query for pending messages, configuring the companion PAN device to send a MAC ACK with a Frame Pending FP bit set to '0', thereby causing the at least one child device to return to a sleep mode;
receiving a data frame sent to the multiple-protocol PAN device, configuring the companion PAN device to store the received data frame in an indirect queue for a destination address of the multiple-protocol PAN device.

9. The method (900) of Claim 8, further comprising marking, by the companion PAN device the address of the at least one child device as having had a successful radio activity.

10. The method (900) of Claim 8 or Claim 9, further comprising, at the companion PAN device:
receiving a request from the multiple-protocol PAN device for data frames received by the companion PAN device from children of the multiple-protocol PAN device; and
retrieving from memory the stored data frames and sending the stored data frames to the multiple-protocol PAN device.

11. The method (900) of Claim 10, wherein the request from the multiple-protocol PAN device comprises one of:
a dedicated, network-secured command, or
a MAC Data Request having a MAC destination address of the companion PAN device,
a MAC source address of the the multiple-protocol PAN device.

12. The method (900) of claim 11, further comprising, by a scheduler of the companion PAN device:
identifying when a Zigbee^{™} protocol is activated again by the multiple-protocol PAN device that indicates an end to a service activation period; and
scheduling sending to the multiple-protocol PAN device at least one of: stored Data Frames, an activity summary received during an operation by the companion PAN device, a last network frame counter used.

13. The method (900) of any preceding Claim wherein the at least one other communication protocol in the multiple-protocol PAN device is at least one of: a Thread^{™} communication protocol, a protocol based on IEEE 802.15.4 medium access control layer, a protocol based on IEEE 802.15.4 physical layer.

14. A personal access network, PAN, system comprising:
a Zigbee^{™} PAN companion node (620) configured to support Zigbee^{™} communications and adapted to temporarily transition to being a replacement parent Zigbee^{™} device having one or more child Zigbee^{™} end devices having been provided a subset of roles of a full Zigbee^{™} communication stack on behalf of q multiple-protocol PAN device;
the multiple-protocol PAN device (410) configured to support Zigbee^{™} communications and at least one other communication protocol and temporarily transfer a portion of its parent responsibilities to the Zigbee^{™} PAN companion device, the Zigbee^{™} PAN companion device comprising:
a memory (274); and
a processor (274) configured to carry out the method according to any of claims 1 to 13.

15. A PAN companion device (620) configured to support Zigbee^{™} communications and at least one other communication protocol and adapted to temporarily transition to being a replacement parent Zigbee^{™} device having one or more child Zigbee^{™} end devices, wherein the PAN companion device comprises a memory; and a processor configured to carry out the method according to any of preceding Claims 1 to 13.
